# FASCICULE DE BREVET EUROPEEN

(11) **EP 4 100 760 B1**
(45) Date de publication et mention de la délivrance du brevet: **30.09.2026**
(21) Numéro de dépôt: 21706357.7
(22) Date de dépôt: 29.01.2021
(51) Int. Cl.: G01S 5/16, G06T 7/20, G06T 7/70, G01S 3/786

(54) **PROCÉDÉ ET DISPOSITIF DE DÉTECTION OPTIQUE**
VERFAHREN UND VORRICHTUNG ZUR OPTISCHEN DETEKTION
METHOD AND DEVICE FOR OPTICAL DETECTION

(30) Priorité: 06.02.2020 FR 2001196
(43) Date de publication de la demande: 14.12.2022
(73) Titulaire: Centre National d'Études Spatiales, 75039 Paris Cedex 01 (FR)
(72) Inventeur: MONTEL, Johan, 31401 TOULOUSE Cedex 9 (FR)
(74) Mandataire: LLR
(86) Numéro de dépôt international: PCT/FR2021/050165
(87) Numéro de publication internationale: WO 2021/156560

(56) Documents cités:
- WO-A2-2012/002731
- FR-A1- 2 997 258
- US-A1- 2017 122 734

## Description

La présente invention concerne le domaine des méthodes et dispositifs de détection optique d'objet.

Dans le domaine spatial, il est connu de contrôler l'attitude/l'orientation d'un satellite dans l'espace par l'utilisation d'un senseur stellaire, configuré pour détecter, par un moyen d'observation optique, des objets célestes, des étoiles notamment ; la détection de ces objets, dont les positions angulaires sont connues dans un repère inertiel, permet ensuite de déterminer l'orientation du satellite dans ce repère, par référence à la cartographie connue de ces objets détectés et identifiés. Le document D1=US 2017/122734 A1 divulgue ce type de dispositifs et méthodes connues.

L'inconvénient des méthodes et dispositifs connus dans ce domaine est que le rapport signal sur bruit n'est pas toujours suffisant pour permettre, en phase d'accrochage, une bonne détection, notamment dans le cas des nano satellites qui doivent être équipés de senseurs stellaires plus petits, avec un rapport signal à bruit plus faible, et/ou dans le cas de fortes vitesses angulaires au moment de la phase d'accrochage qui est la phase critique du fonctionnement des senseurs stellaires.

L'invention a donc pour but de proposer une solution à tout ou partie de ces problèmes.

A cet effet, la présente invention concerne un procédé de détection optique d'un objet par un capteur d'images, le capteur d'images et l'objet étant mobiles l'un par rapport à l'autre, le capteur d'images étant configuré pour recevoir une mesure d'une vitesse de déplacement du capteur d'images, la vitesse de déplacement étant mesurée dans un repère fixe par rapport à l'objet, le procédé comprenant les étapes suivantes :
- définition d'une zone dans un plan image du capteur d'images, ladite zone comprenant un point central;
- calcul d'une vitesse de déplacement d'un point image virtuel dans le plan image, le point image virtuel étant une image virtuelle d'un point objet virtuel, formée sur le plan image au point central de la zone, la vitesse de déplacement du point image virtuel étant calculée à partir de la mesure de la vitesse de déplacement du capteur d'images;
- calcul et détermination d'un temps d'intégration, le temps d'intégration calculé étant une fonction croissante de la vitesse de déplacement calculée;
- acquisition d'une image brute sur la base du temps d'intégration déterminé;
- calcul d'une image de référence fonction d'un déplacement estimé du point image virtuel sur le plan image pendant le temps d'intégration, le déplacement estimé étant estimé sur la base du temps d'intégration et de la vitesse de déplacement calculée du point image virtuel sur le plan image, l'image de référence étant calculée sur la base d'une réponse impulsionnelle locale au point image et sur la base du déplacement estimé du point image ;
- calcul d'une image corrigée fonction de l'image brute et de l'image de de référence ;
- sélection de pixels dans l'image corrigée, les pixels sélectionnés ayant une valeur supérieure à un seuil prédéterminé.

Selon un mode de mise en œuvre, l'invention comprend une ou plusieurs des caractéristiques suivantes, seules ou en combinaison techniquement acceptable. Selon un mode de mise en œuvre, la vitesse de déplacement du capteur d'images comprend une vitesse linéaire et/ou une vitesse angulaire permettant de calculer le déplacement dans le plan image du point image virtuel du point objet virtuel. Si l'objet est à une distance faible, la vitesse linéaire et la vitesse angulaire sont nécessaires ; si l'objet est à une distance très importante, comme les étoiles, seul la vitesse angulaire du capteur images est nécessaire.

Selon ces dispositions, au lieu de baisser le temps d'intégration sous l'effet de la vitesse relative de l'objet à détecter par rapport au capteur d'images, le temps d'intégration est augmenté avec la vitesse; ainsi le rapport signal sur bruit sur l'image corrigée est maintenu constant malgré la vitesse relative de l'objet.

Selon un mode de mise en œuvre, l'objet est une étoile, et le capteur d'images est un senseur stellaire.

Selon un mode de mise en œuvre, la vitesse de déplacement mesurée est une vitesse angulaire.

Selon un mode de mise en œuvre, la vitesse angulaire mesurée est mesurée par un senseur inertiel, par exemple un gyromètre.

Selon un mode de mise en œuvre, le senseur inertiel est intégré au capteur d'images.

Selon un mode de mise en œuvre la mesure de la vitesse peut être effectuée à partir de l'image optique dans une étape préalable.

Selon un mode de mise en œuvre, l'image brute acquise est une matrice de pixels, chaque pixel de la matrice étant une valeur d'un signal optique mesurée par un détecteur élémentaire d'une matrice de détecteurs élémentaires dans le plan image.

Selon un mode de mise en œuvre, l'image brute acquise est un échantillonnage selon la matrice de pixels d'une image formée dans le plan image par une optique du capteur d'images.

Selon un mode de mise en œuvre, le procédé comprend une étape de détermination d'une position dans le plan image d'une image d'un point de l'objet, en fonction de la position et de la valeur des pixels sélectionnés dans l'image corrigée.

Selon un mode de mise en œuvre, l'étape de détermination de la position du point de l'objet comprend un calcul d'un barycentre géométrique des positions dans le plan image des pixels sélectionnés dans l'image corrigée.

Selon un mode de mise en œuvre, l'image de référence est la corrélation croisée de la réponse impulsionnelle locale et d'une fonction indicatrice d'un détecteur élémentaire contenant le point image et d'une fonction indicatrice du déplacement estimé du point image.

Selon un mode de mise en œuvre, la fonction indicatrice d'un détecteur élémentaire est une fonction de deux variables x et y, définie dans le plan image, qui vaut 1 en tout point du plan image à l'intérieur d'une surface dudit détecteur élémentaire dans le plan image, et qui vaut 0 partout ailleurs dans le plan de l'image.

Selon un mode de mise en œuvre, la fonction indicatrice du déplacement estimé est une fonction de deux variables x et y, définie dans le plan image, qui vaut 1 en tout point du plan de l'image sur un segment colinéaire au déplacement estimé, ledit segment passant par le point central de la zone du plan image, et qui vaut 0 partout ailleurs dans le plan image.

Selon un mode de mise en œuvre, la réponse impulsionnelle locale et la fonction indicatrice du détecteur élémentaire et la fonction indicatrice du déplacement calculé sont chacune sur-échantillonnées, selon un facteur prédéterminé de sur-échantillonnage, par rapport à l'échantillonnage selon la matrice de pixels de l'image brute; selon ce mode de mise en œuvre, la réponse impulsionnelle locale et la fonction indicatrice du détecteur élémentaire et la fonction indicatrice du déplacement calculé sont chacune calculées pour un ensemble de points (x, y) du plan image, lesdits points (x, y) étant répartis sur les lignes et les colonnes de la matrice des pixels de l'image brute, de sorte que sur chaque ligne, respectivement, sur chaque colonne, de ladite matrice, un nombre desdits points (x, y) de l'ensemble de point (x, y), est égal ou supérieur à un nombre de pixels de ladite ligne, respectivement, de ladite colonne, multiplié par le facteur de sur-échantillonnage.

Selon ce mode de mise en œuvre, l'image de référence, produit de la convolution de la réponse impulsionnelle locale sur-échantillonnée et d'une fonction indicatrice, sur-échantillonnée, d'un détecteur élémentaire et d'une fonction indicatrice, sur-échantillonnée, du déplacement calculé du point central de la zone du plan image, est sur-échantillonnée dans le même rapport de sur-échantillonnage.

Selon un mode de mise en œuvre, le facteur de sur-échantillonnage est supérieur à 5, de préférence supérieur à 10.

Selon un mode de mise en œuvre, l'image de référence est normalisée, c'est-à-dire que la somme des valeurs de l'image de référence sur l'ensemble des points (x, y) sur lesquels l'image de référence est calculée est égale à 1.

Selon un mode de mise en œuvre, l'image de référence sur-échantillonnée est sous-échantillonnée selon un rapport de sous-échantillonnage inverse du rapport de sur-échantillonnage.

Selon un mode de mise en œuvre, l'image corrigée est une fonction d'un produit d'une convolution de l'image brute avec l'image de référence.

Selon un mode de mise en œuvre, l'étape de définition d'une zone comprend la définition d'une pluralité de zones dans le plan image, ladite pluralité de zones formant une partition du plan image, chaque zone de la pluralité de zones comprenant un point central de ladite zone.

Selon un mode de mise en œuvre, l'étape de calcul de la vitesse de déplacement du point image virtuel est mise en œuvre au point central de chaque zone de la pluralité de zones, et dans laquelle l'étape de calcul et détermination du temps d'intégration comprend une étape de calcul d'un temps d'intégration pour le point central de chaque zone de la pluralité de zones, en fonction de la vitesse de déplacement calculée pour ledit point central de ladite zone, et une étape de sélection d'un temps d'intégration déterminé, parmi les temps d'intégration calculés, la sélection étant réalisée, selon un critère de sélection, le temps d'intégration calculé pour le point central de chaque zone de la pluralité de zones étant une fonction croissante de la vitesse de déplacement calculée pour le point central de chaque zone de la pluralité de zones à l'étape de calcul de la vitesse de déplacement.

Selon un mode de mise en œuvre, le critère de sélection comprend une détermination du temps d'intégration calculé maximum parmi les temps d'intégration calculés pour le point central de chaque zone de la pluralité de zones.

Selon un mode de mise en œuvre, la fonction croissante de la vitesse de déplacement s'écrit comme suit : ${t}_{i}^{∗} = \frac{{t}_{0}^{2}}{2 \sqrt{2 π}} \sqrt{{\dot{d}}^{2} + \sqrt{{\dot{d}}^{4} + \frac{64 {π}^{2}}{{t}_{0}^{4}}}}$ où ${t}_{i}^{∗}$ est le temps d'intégration déterminé, *ḋ* est la vitesse de déplacement calculée, t₀ étant une valeur d'un temps d'intégration déterminée pour une vitesse de déplacement nulle.

Selon un mode de mise en œuvre, le temps d'intégration est déterminé de sorte qu'un déplacement calculé pour chaque zone pendant le temps d'intégration est inférieur à un déplacement maximum prédéterminé.

Selon un mode de mise en œuvre, le déplacement maximum prédéterminé est compris entre 50 et 150 pixels, de préférence compris entre 90 et 110 pixels, de préférence égal à 100 pixels.

Selon un mode de mise en œuvre, l'étape de calcul d'une image de référence comprend le calcul d'une pluralité d'images de référence, chaque image de référence étant fonction du déplacement estimé, pendant le temps d'intégration, du point image virtuel au point central de chaque zone de la pluralité de zones.

Selon un mode de mise en œuvre, l'étape de calcul d'une image corrigée comprend, pour chaque zone de la pluralité de zones dans le plan image, le calcul d'une image corrigée obtenue par une agrégation d'une pluralité d'images corrigées élémentaires, chaque image corrigée élémentaire étant calculée sur la base de l'image brute et d'une image de référence de la pluralité d'images de référence.

Selon un mode de mise en œuvre, l'étape de calcul de l'image corrigée, pour chaque zone de la pluralité de zone, comprend une extraction d'une sous-image de l'image corrigée, la sous-image correspondant à ladite zone, suivi d'une agrégation de l'ensemble des sous-images extraites de l'image corrigée.

Selon un mode de mise en œuvre, l'image brute est une matrice de pixels, chaque pixel de la matrice étant une valeur d'un signal optique mesuré par un détecteur élémentaire d'une matrice de détecteurs élémentaires dans le plan image.

Selon un mode de mise en œuvre, chaque zone de la pluralité de zones du plan image est définie par une sous-matrice de la matrice de pixels de l'image brute, et, pour chaque zone de la pluralité de zones, une matrice masque de ladite zone, est définie, la matrice masque étant de même dimension que la matrice de pixels de l'image brute, chaque point de la matrice masque qui correspond à un point de la sous-matrice prenant la valeur 1 et les autres points de la matrice masque prenant la valeur 0.

Selon un mode de mise en œuvre, l'image corrigée est une matrice de pixels corrigés, et pour chaque zone de la pluralité de zones, l'extraction de la sous-image de l'image corrigée comprend une multiplication terme-à-terme de la matrice de pixels corrigés par la matrice masque de ladite zone.

Selon un mode mise en œuvre, l'étape de sélection dans l'image corrigée, des pixels ayant une valeur supérieure à un seuil prédéterminé, comprend une étape de sélection d'au moins un pixel correspondant à un extremum local à l'intérieur d'une portion de l'image corrigée.

Selon un mode de mise en œuvre, l'au moins un pixel correspond à un extremum local si la valeur de l'au moins un pixel est supérieur ou inférieur à la valeur de chaque autre pixel à l'intérieur de la portion de l'image corrigée

Selon un mode de mise en œuvre, le procédé comprend une étape de détermination d'au moins une position dans le plan image d'une image d'un point de l'objet, en fonction de la position et de la valeur de l'au moins un pixel correspondant à un extremum local.

L'invention concerne également un dispositif de détection optique d'un objet, le dispositif comprenant un capteur d'images, le capteur d'images et l'objet étant en mouvement l'un par rapport à l'autre, le capteur d'images étant configuré pour recevoir une mesure d'une vitesse de déplacement du capteur d'images, la vitesse de déplacement du capteur d'images étant mesurée dans un repère fixe par rapport à l'objet, le dispositif de détection comprenant en outre un module de traitement configuré pour recevoir et traiter les images acquises par le capteur, le module de traitement comprenant :
- un module de définition configuré pour définir au moins une zone dans un plan image du capteur d'images, l'au moins une zone comprenant un point central;
- un premier module de calcul configuré pour calculer une vitesse de déplacement d'un point image virtuel dans le plan image, le point image virtuel étant une image virtuelle, d'un point objet virtuel, formée sur le plan image au point central de l'au moins une zone, la vitesse de déplacement du point image étant calculée à partir de la mesure de la vitesse de déplacement du capteur d'images;
- un deuxième module, configuré pour calculer un temps d'intégration calculé selon une fonction croissante de la vitesse de déplacement calculée du point image virtuel au point central de l'au moins une zone, et pour déterminer un temps d'intégration déterminé sur la base du temps d'intégration calculé au point central de l'au moins une zone, et pour commander l'acquisition par le capteur d'images d'une image brute, sur la base du temps d'intégration déterminé;
- un troisième module configuré pour calculer une image de référence fonction du déplacement estimé, pendant le temps d'intégration, du point image virtuel au point central de l'au moins une zone sur le plan image, le déplacement estimé étant estimé sur la base du temps d'intégration et de la vitesse de déplacement calculée du point image virtuel, l'image de référence étant calculée sur la base d'une réponse impulsionnelle locale au point image et sur la base du déplacement estimé du point image ;
- un quatrième module configuré pour calculer une image corrigée fonction de l'image brute et de l'image de de référence ;
- un cinquième module configuré pour sélectionner des pixels dans l'image corrigée, les pixels sélectionnés ayant une valeur supérieure à un seuil prédéterminé.

L'invention concerne également un programme d'ordinateur comprenant un ensemble d'instructions exécutables sur le processeur d'un ordinateur, configuré pour que lorsque ledit ensemble d'instructions est exécuté sur ledit processeur le procédé selon l'un des modes de mise en œuvre décrits ci-avant est mis en œuvre.

L'invention concerne également un support lisible par un ordinateur, ledit support comprenant un ensemble d'instructions exécutables sur le processeur d'un ordinateur, configuré pour que lorsque ledit ensemble d'instructions est exécuté sur ledit processeur le procédé selon l'un des modes de mise en œuvre décrits ci-avant est mis en œuvre.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.
[Fig. 1] est une représentation schématique d'un logigramme des étapes d'un mode de réalisation du procédé selon l'invention.
[Fig. 2] est une vue simplifiée, en perspective, d'un mode de réalisation d'un dispositif selon l'invention illustrant le phénomène d'étalement de la tâche formée dans le plan de l'image par une étoile.

Un mode de mise en œuvre et de réalisation de l'invention sera décrit en se référant à une application particulière de l'invention à la détection d'étoiles par un senseur stellaire en phase d'accrochage. Néanmoins l'homme du métier comprendra que cet exemple de mise en œuvre de l'invention n'est pas limitatif et que l'invention peut également être mise en œuvre pour toutes les applications de détection optique d'objets dans de mauvaises conditions de rapport signal à bruit, et/ou dans des conditions cinématiques défavorables. Par exemple, l'invention peut être mise en œuvre et appliquée à un télescope ou une caméra au sol visant à détecter des objets célestes ou aériens ou tout autre objet dont on connait la forme mais pas la position, tels que débris spatiaux observés depuis le sol, recalage optique de satellites depuis le sol, potentiellement de jour, etc..., pourvu que l'on dispose d'une information sur une vitesse relative de l'objet à détecter par rapport au capteur d'images optiques ou par rapport au véhicule porteur du capteur.

Le procédé 100 selon l'invention a pour but d'améliorer la capacité de détection optique d'objet faiblement lumineux, des étoiles par exemple, dont la position dans le champ d'observation du capteur d'images est a priori inconnue.

Le procédé 100 selon l'invention utilise pour cela une connaissance, même approximative, d'une réponse impulsionnelle (PSF) dynamique du capteur, déterminée sur la base d'une mesure d'une vitesse de déplacement du capteur par rapport à l'objet.

La vitesse de déplacement du capteur d'images par rapport à l'objet imagé peut comprendre une vitesse linéaire et/ou une vitesse angulaire permettant de calculer le déplacement dans le plan image d'un point image d'un point de l'objet considéré. Si l'objet est à une distance faible, la vitesse linéaire et la vitesse angulaire sont nécessaires; si l'objet est à une distance très importante, comme une étoile par exemple, seul la vitesse angulaire du capteur d'images est nécessaire.

Ainsi, dans le cas de la détection d'une étoile, le procédé consiste à adapter le temps d'intégration en fonction de la vitesse angulaire mesurée, de sorte que le temps d'intégration est une fonction croissante de cette vitesse angulaire. Cette méthode diffère ainsi des procédés connus qui consistent généralement à limiter voire à diminuer le temps d'intégration à mesure que la vitesse de déplacement du capteur d'images augmente, afin de limiter la taille du « filé ».

En contrepartie, la méthode présente les caractéristiques suivantes : le mouvement de « filé » des étoiles augmente de manière quadratique vis à vis de la vitesse angulaire, ce qui nécessite de traiter un nombre croissant de pixels. Le calcul à mettre en œuvre consiste à effectuer la corrélation croisée 2D entre l'image brute acquise par le capteur d'images, et la PSF dynamique, dont la taille du support augmentera avec la longueur du filé. Ce désavantage est à pondérer avec le fait qu'une telle méthode serait mise en œuvre en mode accrochage, phase durant laquelle les contraintes de vitesse de calcul sont relâchées.

Un senseur stellaire miniature de la classe (f~15mm, Φ=f/2, n=1000x1000 pixels de 8µm, σ~20e-), mettant en œuvre le procédé selon l'invention, sera capable d'effectuer un accrochage avec des vitesses angulaires de l'ordre de 5 degrés/s.

Le procédé 100 selon l'invention, basée sur la connaissance de la PSF dynamique, permet de gagner environ un facteur 2 sur le bruit de position, par rapport à un calcul barycentrique «classique».

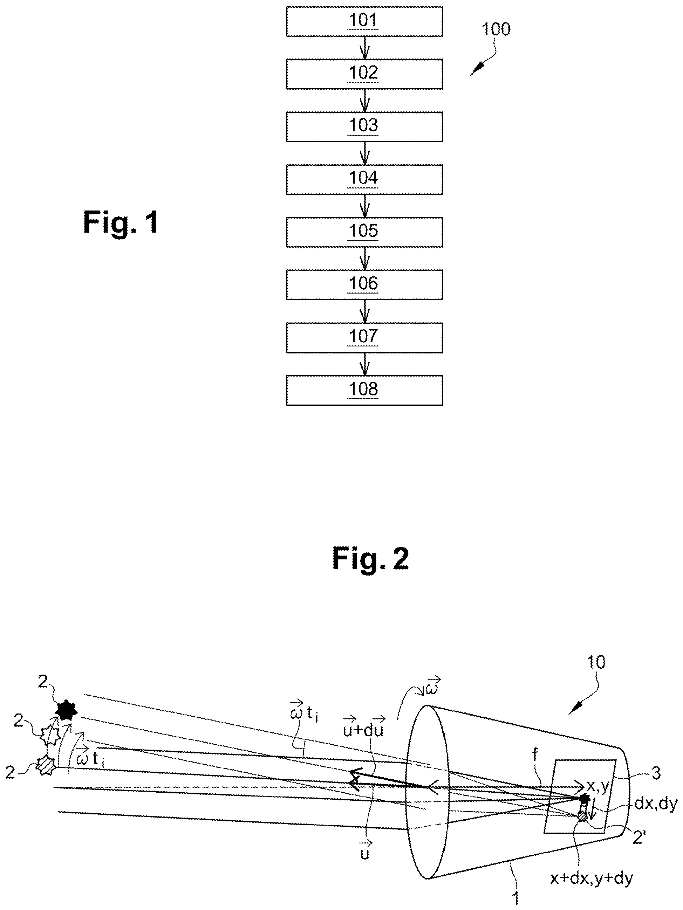

Les différentes étapes du procédé selon l'invention vont maintenant être décrite en référence aux figures 1 et 2.

Sur la figure 2, sont schématiquement représentés un capteur d'images 1 utilisé pour détecter un objet 2, par exemple une étoile 2. Le capteur d'images 1 est porté par un véhicule porteur, par exemple un satellite, non représenté sur la figure. Le capteur d'images 1 et le véhicule porteur sont solidairement fixés l'un à l'autre, autrement dit la vitesse de déplacement du capteur d'images 1 et celle du porteur sont les mêmes.

Le véhicule porteur est animé d'une vitesse ω̅, on cherche à calculer la vitesse de déplacement dans le plan de l'image, ou plan image 3, de l'image d'un point inertiel, i.e. de l'image d'un point fixe dans un repère inertiel, ledit point fixe étant par exemple une étoile présente dans le champ d'observation du capteur d'images. La vitesse de déplacement est ainsi calculée dans un repère liée au plan de l'image 3.

On note : $\vec{u} = \left[\begin{matrix}{u}_{x} \\ {u}_{y} \\ {u}_{z}\end{matrix}\right]$ le vecteur directeur de l'étoile 2 qui serait positionnée sur l'image en (x,y): $x = f \frac{{u}_{x}}{{u}_{z}}$ $y = f \frac{{u}_{y}}{{u}_{z}}$ f est la distance focale. $\frac{d \vec{u}}{dt} = \vec{ω} ∧ \vec{u} = \left[\begin{matrix}0 & - {ω}_{z} & {ω}_{y} \\ {ω}_{z} & 0 & - {ω}_{x} \\ - {ω}_{y} & {ω}_{x} & 0\end{matrix}\right] \vec{u}$ $\begin{matrix}\frac{dx}{dt} = \frac{\partial x}{\partial {u}_{x}} \frac{\partial {u}_{x}}{\partial t} + \frac{\partial x}{\partial {u}_{z}} \frac{\partial {u}_{z}}{\partial t} = \frac{f}{{u}_{z}} \left(-{ω}_{z}{u}_{y}+{ω}_{y}{u}_{z}\right) - f \frac{{u}_{x}}{{u}_{z}^{2}} \left(-{ω}_{y}{u}_{x}+{ω}_{x}{u}_{y}\right) \\ = f {ω}_{y} - {ω}_{z} y + {ω}_{y} \frac{{x}^{2}}{f} - {ω}_{x} \frac{xy}{f}\end{matrix}$ $\begin{matrix}\frac{dy}{dt} = \frac{\partial y}{\partial {u}_{y}} \frac{\partial {u}_{y}}{\partial t} + \frac{\partial y}{\partial {u}_{z}} \frac{\partial {u}_{z}}{\partial t} = \frac{f}{{u}_{z}} \left({ω}_{z}{u}_{x}-{ω}_{x}{u}_{z}\right) - f \frac{{u}_{y}}{{u}_{z}^{2}} \left(-{ω}_{y}{u}_{x}+{ω}_{x}{u}_{y}\right) \\ = - f {ω}_{x} + {ω}_{z} x - {ω}_{x} \frac{{y}^{2}}{f} + {ω}_{y} \frac{xy}{f}\end{matrix}$ $\left[\begin{matrix}dx \\ dy\end{matrix}\right] = \left[\begin{matrix}- \frac{xy}{f} & \frac{{f}^{2} + {x}^{2}}{f} & - y \\ - \frac{{f}^{2} + {y}^{2}}{f} & \frac{xy}{f} & x\end{matrix}\right] \vec{ω} dt$

Durant le temps d'intégration tᵢ de l'image, il faut donc intégrer cette équation pour connaitre le déplacement (Δ*x,*Δ*y*) à appliquer à chaque pixel. Si on considère que la vitesse angulaire est constante durant le temps d'intégration ti, il vient : $\left[\begin{matrix}Δ x \\ Δ y\end{matrix}\right] \approx \left[\begin{matrix}- \frac{xy}{f} & \frac{{f}^{2} + {x}^{2}}{f} & - y \\ - \frac{{f}^{2} + {y}^{2}}{f} & \frac{xy}{f} & x\end{matrix}\right] \vec{ω} {t}_{i}$

Le déplacement (Δ*x,*Δ*y*) représente ainsi l'étalement de la tâche formée dans le plan de l'image par l'étoile 2, vue par le capteur d'images 1 au cours du déplacement angulaire du capteur d'images 1 à la vitesse angulaire ω̅ pendant la durée tᵢ du temps d'intégration. Sur la figure 2, sont représentées 3 positions successives de l'étoile 2 au cours de son déplacement angulaire relativement au capteur d'image 1, et la trace dans le plan image 3 des positions correspondantes de la tâche formée sur le plan image 3 par l'image de l'étoile 2 dans ces positions successives.

Pour déterminer 103 un temps d'intégration, pour l'acquisition 104 par le capteur d'images 1, d'une image brute de la scène observée, comprenant par exemple l'étoile 2 illustrée sur la figure 2 dans différentes positions par rapport au capteur d'images 1, le procédé selon l'invention comprend une étape de définition 101 de n_zones x n_zones imagettes formant une partition de l'image totale dans le plan image 3 du capteur d'images 1, n étant un nombre entier supérieur ou égal à 1 ; chacune des zones comprend un point central, ou centre. Pour chaque centre de ces zones, de position (x, y), une vitesse de déplacement d'un point image virtuel dans le plan image 3 est calculée au cours d'une étape de calcul 102; le point image virtuel est une image virtuelle d'un point objet virtuel, par exemple une étoile 2, formée sur le plan image 3 au point central de la zone ; la vitesse de déplacement $\vec{\dot{d}}$ du point image virtuel est calculée, au cours de l'étape de calcul 102, à partir d'une mesure de la vitesse de déplacement du capteur d'images, par exemple en appliquant la formule ci-dessous dans le cas considéré d'une vitesse de déplacement angulaire ω̅ du capteur d'images 1, la formule ci-dessous étant dérivée de la formule précédente : $\vec{\dot{d}} = \left[\begin{matrix}{\dot{d}}_{x} \\ {\dot{d}}_{y}\end{matrix}\right] = \left[\begin{matrix}- \frac{xy}{f} & \frac{{f}^{2} + {x}^{2}}{f} & - y \\ - \frac{{f}^{2} + {y}^{2}}{f} & \frac{xy}{f} & x\end{matrix}\right] \vec{ω}$ $\dot{d} = \sqrt{{{\dot{d}}_{x}}^{2} + {{\dot{d}}_{y}}^{2}}$

Pour chaque centre de ces zones, d'indice i de 1 à n, sur la base de la vitesse de déplacement calculée au cours de l'étape précédente, une étape de calcul et de détermination 103 d'un temps d'intégration calcule puis détermine un temps d'intégration.

Pour le centre de chaque zone, l'étape de calcul et de détermination 103 du temps d'intégration calcule un temps d'intégration ${t}_{i}^{∗}$ calculé selon une fonction de la vitesse de déplacement *ḋ* calculée pour ledit centre de ladite zone, par exemple, selon la formule suivante : ${t}_{i}^{∗} = \frac{{t}_{0}^{2}}{2 \sqrt{2 π}} \sqrt{{\dot{d}}^{2} + \sqrt{{\dot{d}}^{4} + \frac{64 {π}^{2}}{{t}_{0}^{4}}}}$

Le temps d'intégration calculé au point central de chaque zone est ainsi une fonction croissante de la vitesse de déplacement calculé audit point central de la ladite zone, contrairement aux procédés connus de détection optique.

L'étape de calcul et détermination (103) du temps d'intégration comprend en outre une étape de sélection d'un temps d'intégration déterminé, parmi les temps d'intégration calculés, selon un critère de sélection.

Selon un mode de mise en œuvre, le critère de sélection est un critère d'optimisation, sélectionnant le temps d'intégration ${t}_{i m}^{∗}$ qui est le maximum parmi l'ensemble des temps d'intégration ${t}_{i}^{∗}$.

Au cours de l'étape de calcul et détermination 103 du temps d'intégration, un déplacement *dₘ* est ainsi calculé selon la formule suivante par exemple, dans laquelle la vitesse de déplacement ${\dot{d}}_{i m}^{∗}$ est la vitesse de déplacement associée au temps d'intégration ${t}_{i m}^{∗}$: ${d}_{m} = {t}_{i m}^{∗} {\dot{d}}_{i m}^{∗}$

Le temps d'intégration peut être déterminé de sorte qu'un déplacement *dₘ* calculé pour chaque zone pendant le temps d'intégration est inférieur à un déplacement maximum *dₘₐₓ* prédéterminé, typiquement par exemple 100 pixels. Avantageusement, le déplacement maximum prédéterminé peut être compris entre 10 et 250 pixels, de préférence compris entre 50 et 150 pixels, de préférence encore compris entre 90 et 110 pixels. Ces déplacements préconisés sont des ordres de grandeur fournis à titre indicatif, et sont très importants devant l'état de l'art antérieur qui limite ces déplacements à quelques pixels, typiquement moins de 5 pixels.

Ainsi, si on définit *d*_{max *sat*} par la formule suivante : ${d}_{max sat} = min \left({d}_{max}, {d}_{m}\right)$

Le temps d'intégration *tᵢ* à commander peut être déterminé au cours de l'étape de détermination 103, par exemple sur la base de la formule suivante: ${t}_{i} = {t}_{i m}^{∗} \frac{{d}_{max sat}}{{d}_{m}}$

La vitesse de déplacement du capteur d'images peut être mesurée par un senseur inertiel, par exemple un gyromètre, porté par le véhicule porteur ou intégré au capteur d'images 1; la mesure de la vitesse de déplacement du capteur d'images peut aussi être effectuée à partir de l'image optique dans une étape préalable.

Une fois le temps d'intégration *tᵢ* déterminé au cours de l'étape de détermination 103, une image brute, notée IM dans la suite de la description, est acquise par le capteur d'images au cours d'une étape d'acquisition 104, sur la base du temps d'intégration déterminé.

L'image brute acquise IM est en général une matrice de pixels, chaque pixel de la matrice étant une valeur d'un signal optique mesurée par un détecteur élémentaire d'une matrice de détecteurs élémentaires dans le plan image. Ainsi, l'image brute acquise IM est un échantillonnage selon la matrice de pixels d'une image formée dans le plan image par une optique du capteur d'images.

On notera dans la suite (i,j) les indices selon les lignes et les colonnes de la matrice de chaque zone parmi les n_zones x n_zones imagettes formant une partition de l'image totale dans le plan image 3.

Pour chaque zone (i, j), une image de référence est calculée, au cours d'une étape de calcul d'une image de référence 105, sur la base d'un déplacement estimé *̅d̅*̅ sur le plan image 3, pendant le temps d'intégration *tᵢ*, d'un point image virtuel projeté au point central de ladite zone, le déplacement estimé *̅d̅*̅ étant fonction du temps d'intégration déterminé et de la vitesse de déplacement du point image virtuel sur le plan image 3 calculée au cours de l'étape de calcul d'une vitesse de déplacement 102; Ainsi, le déplacement estimé *̅d̅*̅ au centre de la zone peut être estimé selon la formule ci-dessous: $\vec{d} = \vec{\dot{d}} {t}_{i}$

L'image de référence peut être calculée sur la base d'une réponse impulsionnelle (PSF) locale au centre de la zone et sur la base du déplacement estimé *̅d̅*̅ au centre de la zone.

Ainsi, l'image de référence peut être le produit d'une convolution de la PSF locale et d'une fonction indicatrice d'un détecteur élémentaire contenant le point image et d'une fonction indicatrice du déplacement estimé du point image. La fonction indicatrice d'un détecteur élémentaire est une fonction de deux variables x et y, définie dans le plan image, qui vaut 1 en tout point du plan image à l'intérieur d'une surface dudit détecteur élémentaire dans le plan image, et qui vaut 0 partout ailleurs dans le plan de l'image. La fonction indicatrice du déplacement estimé dₓ, d_{y} est une fonction de deux variables x et y, définie dans le plan image, qui vaut 1 en tout point du plan de l'image sur un segment colinéaire au déplacement estimé dₓ, d_{y}, ledit segment passant par le point central de la zone considéré du plan image, et qui vaut 0 partout ailleurs dans le plan image.

Une réponse impulsionnelle (PSF) dynamique locale normalisée (PSFDLN), dépendant du déplacement *̅d̅*̅ estimé localement, au centre de ladite zone, et de la PSF locale normalisée (PSFLN) propre à la position (x,y) peut s'écrire selon la formule suivante : $PSFDLN = PSFLN ∗ {Π}_{1 , 1} ∗ {Π}_{{d}_{x} , {d}_{y}}$

Selon un mode de mise en œuvre, la réponse impulsionnelle locale et la fonction indicatrice du détecteur élémentaire et la fonction indicatrice du déplacement calculé sont chacune sur-échantillonnées, selon un facteur prédéterminé de sur-échantillonnage, par rapport à l'échantillonnage selon la matrice de pixels de l'image brute; autrement dit, la réponse impulsionnelle locale et la fonction indicatrice du détecteur élémentaire et la fonction indicatrice du déplacement calculé sont chacune calculées pour un ensemble de points (x, y) du plan image, lesdits points (x, y) étant répartis sur les lignes et les colonnes de la matrice des pixels de l'image brute, de sorte que sur chaque ligne, respectivement, sur chaque colonne, de ladite matrice, un nombre desdits points (x, y) de l'ensemble de point (x, y), est égal ou supérieur à un nombre de pixels de ladite ligne, respectivement, de ladite colonne, multiplié par le facteur de sur-échantillonnage.

Selon ce mode de mise en œuvre, l'image de référence, produit de la convolution de la réponse impulsionnelle locale sur-échantillonnée et d'une fonction indicatrice, sur-échantillonnée, d'un détecteur élémentaire et d'une fonction indicatrice, sur-échantillonnée, du déplacement calculé du point central de la zone du plan image, est sur-échantillonnée dans le même rapport de sur-échantillonnage.

Avantageusement, le facteur de sur-échantillonnage est supérieur à 5, de préférence supérieur à 10.

Ainsi, la PSFL peut être stockée à bord du véhicule porteur et sur-échantillonnée d'un facteur sur_ech, typiquement >10, ainsi que la fonction Π_{1,1} constante. La fonction indicatrice du déplacement (Δ*x,*Δ*y*), est calculée à bord dynamiquement.

Avantageusement, l'image de référence peut être normalisée, c'est-à-dire que la somme des valeurs de l'image de référence sur l'ensemble des points (x, y) sur lesquels l'image de référence est calculée est égale à 1.

Avantageusement, l'image de référence sur-échantillonnée est ensuite sous-échantillonnée selon un rapport de sous-échantillonnage inverse du rapport de sur-échantillonnage, afin de revenir à un taux d'échantillonnage correspondant à celui de la matrice de l'image brute.

Si on choisit la PSFL normalisée alors la PSFDL est aussi normalisée par construction, mais pour des raisons numériques, on peut effectuer le calcul suivant : $PSFDLN = \frac{PSFDL}{\sum {PSFDL}_{k , l}}$

L'image de référence calculée au cours de l'étape de calcul d'une image de référence 105 pour chaque zone (i, j), prend ainsi la forme, pour chaque zone (i,j), d'une matrice M, qui est un sous-échantillonnage de facteur sur_ech de PSFDLN calculée sur ladite zone (i, j).

L'étape suivante du procédé selon l'invention est une étape de calcul d'une image corrigée 106 fonction de l'image brute et de l'image de référence.

Ainsi, une image de référence M ayant été calculée pour chaque zone (i, j), la corrélation croisée de M avec l'image brute IM est calculée également pour chaque zone (i, j), dont le résultat est représenté par la formule suivante: $z * \left(i, j\right) = \frac{M ∗ IM \left(-\right)}{\left|M\right| σ}$ où σ est le bruit de lecture de l'image brute, et |*M*| désigne une norme quadratique de la matrice M.

Pour chaque zone (i, j), *z**(*i, j*) a la dimension de l'image brute IM.

On multiplie z* par un masque local µ(i,j) valant 1 sur la zone (i,j) et zéro ailleurs, selon la formule : ${z}_{m}^{∗} \left(i, j\right) = z * \left(i, j\right) . μ \left(i, j\right)$

On dispose alors des n_zones x n_zones images ${z}_{m}^{∗} \left(i, j\right)$*,* qui ont chacune la taille de l'image brute, avec des pixels ayant une valeur nulle pour tous les pixels qui ne sont pas dans la zone considérée.

L'image corrigée est ainsi la somme de toutes les images *z**(*i*, *j*). Cette image corrigée, notée IMC, a la même dimension que l'image brute IM, et peut être représentée par la formule : $IMC = {\sum }_{i , j} {z}_{m}^{∗} \left(i, j\right)$

Après l'étape de calcul de l'image corrigée 106, le procédé 100 comprend une étape de sélection 107 de pixels dans l'image corrigée, les pixels sélectionnés ayant une valeur supérieure à un seuil prédéterminé.

La sélection peut ainsi comprendre un seuillage sur l'image corrigée: on sélectionne les termes (i*,j*) dont la valeur IMC (i*,j*) est supérieure à SNR, où SNR est un seuil de signal à bruit, typiquement SNR = 5, afin de limiter la probabilité de fausse détection. $IMC \left(i*,j*\right) > SNR$

Puis on peut par exemple sélectionner les maxima locaux, c'est à dire que l'on sélectionne uniquement les pixels maximum sur un voisinage local, typiquement sur un carré de 30x30 pixels, afin de ne pas sélectionner plusieurs pixels de la même étoile (et donc obtenir plusieurs détections pour une même étoile). $\left(i*,j*\right) sélectionné ⇔ \left\{\begin{matrix}IMC \left(i*,j*\right) > SNR et ∀ i , j tels que \left|i-i*\right| < δ et \left|j-j*\right| \\ \left〈δ,IMC\left(i*,j*\right)\right〉 IMC \left(i, j\right)\end{matrix}\right\}$

Selon un mode de mise en œuvre, le procédé 100 comprend une étape de détermination d'une position 108 dans le plan image d'une image d'un point de l'objet, en fonction de la position et de la valeur des pixels sélectionnés dans l'image corrigée. Ainsi, l'étape de détermination de la position du point de l'objet peut comprendre, par exemple, un calcul d'un barycentre géométrique des positions, dans le plan image, des pixels sélectionnés dans l'image corrigée.

L'invention concerne également un dispositif 10 de détection optique d'un objet 2, le dispositif comprenant un capteur d'images 1, le capteur d'images 1 et l'objet 2 étant en mouvement l'un par rapport à l'autre ; le capteur d'images 1 est configuré pour recevoir une mesure d'une vitesse de déplacement du capteur d'images 1, la vitesse de déplacement du capteur d'images 1 étant mesurée dans un repère fixe par rapport à l'objet 2; le dispositif 10 de détection comprend en outre un module de traitement configuré pour recevoir et traiter les images acquises par le capteur, le module de traitement comprenant :
- un premier module configuré pour définir au moins une zone dans un plan image 3 du capteur d'images 1, l'au moins une zone comprenant un point central;
- un deuxième module configuré pour calculer une vitesse de déplacement d'un point image virtuel dans le plan image, le point image virtuel étant une image virtuelle, d'un point objet virtuel, formée sur le plan image 3 au point central de l'au moins une zone, la vitesse de déplacement du point image étant calculée à partir de la mesure de la vitesse de déplacement du capteur d'images;
- un troisième module, configuré pour calculer un temps d'intégration calculé selon une fonction croissante de la vitesse de déplacement du point image virtuel au point central de l'au moins une zone, et pour déterminer un temps d'intégration déterminé sur la base du temps d'intégration calculé au point central de l'au moins une zone, et pour commander l'acquisition par le capteur d'images 1 d'une image brute, sur la base du temps d'intégration déterminé;
- un quatrième module configuré pour calculer une image de référence fonction du déplacement estimé, pendant le temps d'intégration, du point image virtuel au point central de l'au moins une zone sur le plan image, le déplacement estimé étant estimé sur la base du temps d'intégration et de la vitesse de déplacement calculée du point image virtuel;
- un cinquième module configuré pour calculer une image corrigée fonction de l'image brute et de l'image de de référence ;
- un sixième module configuré pour sélectionner des pixels dans l'image corrigée, les pixels sélectionnés ayant une valeur supérieure à un seuil prédéterminé.

Selon un autre aspect, l'invention concerne un programme d'ordinateur comprenant un ensemble d'instructions exécutables sur le processeur d'un ordinateur, configuré pour que lorsque ledit ensemble d'instructions est exécuté sur ledit processeur le procédé est mis en œuvre selon l'un des modes de mise en œuvre décrits ci-avant, ledit processeur étant embarqué sur le véhicule porteur du capteur d'acquisition des images et couplé au capteur.

Selon un autre aspect, l'invention concerne un support lisible par un ordinateur, ledit support comprenant un ensemble d'instructions exécutables sur le processeur d'un ordinateur, configuré pour que lorsque ledit ensemble d'instructions est exécuté sur ledit processeur le procédé est mis en œuvre selon l'une des modes de mise en œuvre décrits ci-avant, ledit processeur étant embarqué sur le véhicule porteur du capteur d'acquisition des images et couplé au capteur.

## Revendications

1. Procédé (100) de détection optique d'un objet (2) par un capteur d'images (1), le capteur d'images (1) et l'objet (2) étant mobiles l'un par rapport à l'autre, le capteur d'images (1) étant configuré pour recevoir une mesure d'une vitesse de déplacement du capteur d'images (1), la vitesse de déplacement étant mesurée dans un repère fixe par rapport à l'objet, le procédé comprenant les étapes suivantes :
- définition (101) d'une zone dans un plan image (3) du capteur d'images (1), ladite zone comprenant un point central;
- calcul d'une vitesse de déplacement (102) d'un point image virtuel dans le plan image, le point image virtuel étant une image virtuelle d'un point objet virtuel, formée sur le plan image (3) au point central de la zone, la vitesse de déplacement du point image virtuel étant calculée à partir de la mesure de la vitesse de déplacement du capteur d'images;
- calcul et détermination (103) d'un temps d'intégration, le temps d'intégration calculé étant une fonction croissante de la vitesse de déplacement calculée;
- acquisition (104) d'une image brute sur la base du temps d'intégration déterminé;
- calcul d'une image de référence (105) fonction d'un déplacement estimé du point image virtuel sur le plan image pendant le temps d'intégration, le déplacement estimé étant estimé sur la base du temps d'intégration et de la vitesse de déplacement calculée du point image virtuel sur le plan image, l'image de référence étant calculée sur la base d'une réponse impulsionnelle locale au point image et sur la base du déplacement estimé du point image;
- calcul d'une image corrigée (106) fonction de l'image brute et de l'image de de référence ;
- sélection (107) de pixels dans l'image corrigée, les pixels sélectionnés ayant une valeur supérieure à un seuil prédéterminé.

2. Procédé (100) selon la revendication 1, comprenant une étape de détermination d'une position (108) dans le plan image d'une image d'un point de l'objet, en fonction de la position et de la valeur des pixels sélectionnés dans l'image corrigée.

3. Procédé (100) selon l'une des revendications 1 à 2, dans laquelle l'image corrigée est la corrélation croisée de l'image brute avec l'image de référence.

4. Procédé (100) selon la revendication 1, dans laquelle l'étape de définition (101) d'une zone comprend la définition (101) d'une pluralité de zones dans le plan image, ladite pluralité de zones formant une partition du plan image, chaque zone de la pluralité de zones comprenant un point central de ladite zone.

5. Procédé (100) selon la revendication 4, dans laquelle l'étape de calcul de la vitesse de déplacement (102) du point image virtuel est mise en œuvre au point central de chaque zone de la pluralité de zones, et dans laquelle l'étape de calcul et détermination (103) du temps d'intégration comprend une étape de calcul d'un temps d'intégration pour le point central de chaque zone de la pluralité de zones, en fonction de la vitesse de déplacement calculée pour ledit point central de ladite zone, et une étape de sélection d'un temps d'intégration déterminé, parmi les temps d'intégration calculés, la sélection étant réalisée, selon un critère de sélection, le temps d'intégration calculé pour le point central de chaque zone de la pluralité de zones étant une fonction croissante de la vitesse de déplacement calculée pour le point central de chaque zone de la pluralité de zones à l'étape de calcul de la vitesse de déplacement (102).

6. Procédé (100) selon la revendication 5, dans laquelle l'étape de calcul d'une image de référence (105) comprend le calcul d'une pluralité d'images de référence, chaque image de référence étant fonction du déplacement estimé, pendant le temps d'intégration, du point image virtuel au point central de chaque zone de la pluralité de zones;

7. Procédé (100) selon la revendication 6, dans laquelle l'étape de calcul d'une image corrigée (106) comprend, pour chaque zone de la pluralité de zones dans le plan image, le calcul d'une image corrigée (106) obtenue par une agrégation d'une pluralité d'images corrigées élémentaires, chaque image corrigée élémentaire étant calculée sur la base de l'image brute et d'une image de référence de la pluralité d'images de référence.

8. Dispositif (10) de détection optique d'un objet (2), le dispositif comprenant un capteur d'images (1), le capteur d'images (1) et l'objet (2) étant en mouvement l'un par rapport à l'autre, le capteur d'images (1) étant configuré pour recevoir une mesure d'une vitesse de déplacement du capteur d'images (1), la vitesse de déplacement du capteur d'images (1) étant mesurée dans un repère fixe par rapport à l'objet (2), le dispositif (10) de détection comprenant en outre un module de traitement configuré pour recevoir et traiter les images acquises par le capteur, le module de traitement comprenant :
- un module de définition configuré pour définir au moins une zone dans un plan image du capteur d'images, l'au moins une zone comprenant un point central;
- un premier module de calcul configuré pour calculer une vitesse de déplacement d'un point image virtuel dans le plan image, le point image virtuel étant une image virtuelle, d'un point objet virtuel, formée sur le plan image au point central de l'au moins une zone, la vitesse de déplacement du point image étant calculée à partir de la mesure de la vitesse de déplacement du capteur d'images;
- un deuxième module, configuré pour calculer un temps d'intégration calculé selon une fonction croissante de la vitesse de déplacement calculée du point image virtuel au point central de l'au moins une zone, et pour déterminer un temps d'intégration déterminé sur la base du temps d'intégration calculé au point central de l'au moins une zone, et pour commander l'acquisition par le capteur d'images (1) d'une image brute, sur la base du temps d'intégration déterminé;
- un troisième module configuré pour calculer une image de référence fonction du déplacement estimé, pendant le temps d'intégration, du point image virtuel au point central de l'au moins une zone sur le plan image, le déplacement estimé étant estimé sur la base du temps d'intégration et de la vitesse de déplacement calculée du point image virtuel, l'image de référence étant calculée sur la base d'une réponse impulsionnelle locale au point image et sur la base du déplacement estimé du point image;
- un quatrième module configuré pour calculer une image corrigée fonction de l'image brute et de l'image de de référence ;
- un cinquième module configuré pour sélectionner des pixels dans l'image corrigée, les pixels sélectionnés ayant une valeur supérieure à un seuil prédéterminé.

9. Programme d'ordinateur comprenant un ensemble d'instructions exécutables sur le processeur d'un ordinateur, configuré pour que lorsque ledit ensemble d'instructions est exécuté sur ledit processeur le procédé selon l'une des revendications 1 à 7 est mis en œuvre.

10. Support lisible par un ordinateur, ledit support comprenant un ensemble d'instructions exécutables sur le processeur d'un ordinateur, configuré pour que lorsque ledit ensemble d'instructions est exécuté sur ledit processeur le procédé selon l'une des revendications 1 à 7 est mis en œuvre.

## Patentansprüche

1. Verfahren (100) zur optischen Detektion eines Objekts (2) durch einen Bildsensor (1), wobei der Bildsensor (1) und das Objekt (2) relativ zueinander beweglich sind, wobei der Bildsensor (1) eingerichtet ist, einen Messwert einer Bewegungsgeschwindigkeit des Bildsensors (1) zu empfangen, wobei die Bewegungsgeschwindigkeit in einem gegenüber dem Objekt festen Bezugssystem gemessen wird, wobei das Verfahren die folgenden Schritte umfasst:
- Definition (101) einer Zone in einer Bildebene (3) des Bildsensors (1), wobei die Zone einen Mittelpunkt umfasst;
- Berechnung einer Bewegungsgeschwindigkeit (102) eines virtuellen Bildpunktes in der Bildebene, wobei der virtuelle Bildpunkt ein virtuelles Bild eines virtuellen Objektpunktes ist, das auf der Bildebene (3) am Mittelpunkt der Zone gebildet wird, wobei die Bewegungsgeschwindigkeit des virtuellen Bildpunktes aus dem Messwert der Bewegungsgeschwindigkeit des Bildsensors berechnet wird;
- Berechnung und Bestimmung (103) einer Integrationszeit, wobei die berechnete Integrationszeit eine steigende Funktion der berechneten Bewegungsgeschwindigkeit ist;
- Erfassung (104) eines Rohbildes auf Basis der bestimmten Integrationszeit;
- Berechnung eines Referenzbildes (105) als Funktion einer geschätzten Verschiebung des virtuellen Bildpunktes auf der Bildebene während der Integrationszeit, wobei die geschätzte Verschiebung auf Basis der Integrationszeit und der berechneten Bewegungsgeschwindigkeit des virtuellen Bildpunktes auf der Bildebene geschätzt wird, wobei das Referenzbild auf Basis einer lokalen Impulsantwort am Bildpunkt und auf Basis der geschätzten Verschiebung des Bildpunktes berechnet wird;
- Berechnung eines korrigierten Bildes (106) als Funktion des Rohbildes und des Referenzbildes;
- Selektion (107) von Pixeln im korrigierten Bild, wobei die selektierten Pixel einen Wert aufweisen, der einen vorbestimmten Schwellenwert überschreitet.

2. Verfahren (100) nach Anspruch 1, umfassend einen Schritt zur Bestimmung einer Position (108) in der Bildebene eines Bildes eines Punktes des Objekts, in Abhängigkeit von der Position und dem Wert der im korrigierten Bild selektierten Pixel.

3. Verfahren (100) nach einem der Ansprüche 1 bis 2, wobei das korrigierte Bild die Kreuzkorrelation des Rohbildes mit dem Referenzbild ist.

4. Verfahren (100) nach Anspruch 1, wobei der Schritt zur Definition (101) einer Zone die Definition (101) einer Vielzahl von Zonen in der Bildebene umfasst, wobei die Vielzahl von Zonen eine Partition der Bildebene bildet und jede Zone der Vielzahl von Zonen einen Mittelpunkt der jeweiligen Zone umfasst.

5. Verfahren (100) nach Anspruch 4, wobei der Schritt zur Berechnung der Bewegungsgeschwindigkeit (102) des virtuellen Bildpunktes am Mittelpunkt jeder Zone der Vielzahl von Zonen durchgeführt wird, und wobei der Schritt zur Berechnung und Bestimmung (103) der Integrationszeit einen Schritt zur Berechnung einer Integrationszeit für den Mittelpunkt jeder Zone der Vielzahl von Zonen in Abhängigkeit von der für den jeweiligen Mittelpunkt der jeweiligen Zone berechneten Bewegungsgeschwindigkeit umfasst, sowie einen Schritt zur Auswahl einer bestimmten Integrationszeit aus den berechneten Integrationszeiten, wobei die Auswahl gemäß einem Auswahlkriterium erfolgt, wobei die für den Mittelpunkt jeder Zone der Vielzahl von Zonen berechnete Integrationszeit eine steigende Funktion der im Schritt zur Berechnung der Bewegungsgeschwindigkeit (102) für den Mittelpunkt jeder Zone der Vielzahl von Zonen berechneten Bewegungsgeschwindigkeit ist.

6. Verfahren (100) nach Anspruch 5, wobei der Schritt zur Berechnung eines Referenzbildes (105) die Berechnung einer Vielzahl von Referenzbildern umfasst, wobei jedes Referenzbild eine Funktion der geschätzten Verschiebung des virtuellen Bildpunktes am Mittelpunkt jeder Zone der Vielzahl von Zonen während der Integrationszeit ist.

7. Verfahren (100) nach Anspruch 6, wobei der Schritt zur Berechnung eines korrigierten Bildes (106) für jede Zone der Vielzahl von Zonen in der Bildebene die Berechnung eines korrigierten Bildes (106) umfasst, das durch Aggregation einer Vielzahl von elementaren korrigierten Bildern erhalten wird, wobei jedes elementare korrigierte Bild auf Basis des Rohbildes und eines Referenzbildes der Vielzahl von Referenzbildern berechnet wird.

8. Vorrichtung (10) zur optischen Detektion eines Objekts (2), wobei die Vorrichtung einen Bildsensor (1) umfasst, wobei der Bildsensor (1) und das Objekt (2) relativ zueinander in Bewegung sind, wobei der Bildsensor (1) eingerichtet ist, einen Messwert einer Bewegungsgeschwindigkeit des Bildsensors (1) zu empfangen, wobei die Bewegungsgeschwindigkeit des Bildsensors (1) in einem gegenüber dem Objekt (2) festen Bezugssystem gemessen wird, wobei die Detektionsvorrichtung (10) ferner ein Verarbeitungsmodul umfasst, das eingerichtet ist, die vom Sensor erfassten Bilder zu empfangen und zu verarbeiten, wobei das Verarbeitungsmodul umfasst:
- ein Definitionsmodul, das eingerichtet ist, mindestens eine Zone in einer Bildebene des Bildsensors zu definieren, wobei die mindestens eine Zone einen Mittelpunkt umfasst;
- ein erstes Berechnungsmodul, das eingerichtet ist, eine Bewegungsgeschwindigkeit eines virtuellen Bildpunktes in der Bildebene zu berechnen, wobei der virtuelle Bildpunkt ein virtuelles Bild eines virtuellen Objektpunktes ist, das auf der Bildebene am Mittelpunkt der mindestens einen Zone gebildet wird, wobei die Bewegungsgeschwindigkeit des Bildpunktes aus dem Messwert der Bewegungsgeschwindigkeit des Bildsensors berechnet wird;
- ein zweites Modul, das eingerichtet ist, eine berechnete Integrationszeit gemäß einer steigenden Funktion der berechneten Bewegungsgeschwindigkeit des virtuellen Bildpunktes am Mittelpunkt der mindestens einen Zone zu berechnen, und eine bestimmte Integrationszeit auf Basis der am Mittelpunkt der mindestens einen Zone berechneten Integrationszeit zu bestimmen, und die Erfassung eines Rohbildes durch den Bildsensor (1) auf Basis der bestimmten Integrationszeit zu steuern;
- ein drittes Modul, das eingerichtet ist, ein Referenzbild als Funktion der geschätzten Verschiebung des virtuellen Bildpunktes am Mittelpunkt der mindestens einen Zone auf der Bildebene während der Integrationszeit zu berechnen, wobei die geschätzte Verschiebung auf Basis der Integrationszeit und der berechneten Bewegungsgeschwindigkeit des virtuellen Bildpunktes geschätzt wird, wobei das Referenzbild auf Basis einer lokalen Impulsantwort am Bildpunkt und auf Basis der geschätzten Verschiebung des Bildpunktes berechnet wird;
- ein viertes Modul, das eingerichtet ist, ein korrigiertes Bild als Funktion des Rohbildes und des Referenzbildes zu berechnen;
- ein fünftes Modul, das eingerichtet ist, Pixel im korrigierten Bild zu selektieren, wobei die selektierten Pixel einen Wert aufweisen, der einen vorbestimmten Schwellenwert überschreitet.

9. Computerprogramm, umfassend Befehle, die bei der Ausführung des Programms durch einen Computer diesen veranlassen, das Verfahren nach einem der Ansprüche 1 bis 7 auszuführen.

10. Computerlesbares Medium, auf dem ein Computerprogramm gespeichert ist, wobei das Programm Befehle umfasst, die bei der Ausführung durch einen Computer diesen veranlassen, das Verfahren nach einem der Ansprüche 1 bis 7 auszuführen.

## Claims

1. Method (100) for optical detection of an object (2) by an image sensor (1), the image sensor (1) and the object (2) being mobile relative to each other, the image sensor (1) being configured to receive a measurement of a speed of displacement of the image sensor (1), the speed of displacement being measured in a fixed coordinate system relative to the object, the method comprising the following steps:
- defining (101) a zone in an image plane (3) of the image sensor (1), said zone comprising a central point;
- calculating a speed of displacement (102) of a virtual image point in the image plane, the virtual image point being a virtual image, of a virtual object point, formed on the image plane (3) at the central point of the zone, the speed of displacement of the virtual image point being calculated from the measurement of the speed of displacement of the image sensor;
- calculating and determining (103) an integration time, the calculated integration time being an increasing function of the calculated speed of displacement;
- acquiring (104) a raw image on the basis of the determined integration time;
- calculating a reference image (105) that depends on an estimated displacement of the virtual image point on the image plane during the integration time, the estimated displacement being estimated on the basis of the integration time and the calculated speed of displacement of the virtual image point on the image plane, the reference image being calculated on the basis of a local impulse response at the image point and on the basis of the estimated displacement of the image point;
- calculating a corrected image (106) that depends on the raw image and the reference image;
- selecting (107) pixels in the corrected image, the selected pixels having a value greater than a predetermined threshold.

2. Method (100) according to claim 1, comprising a step of determining a position (108) in the image plane of an image of a point of the object, depending on the positions and the values of the pixels selected in the corrected image.

3. Method (100) according to claim 1 or 2, wherein the corrected image is the crossed correlation of the raw image with the reference image.

4. Method (100) according to claim 1, wherein the step (101) of defining a zone comprises defining (101) a plurality of zones in the image plane, said plurality of zones forming a partition of the image plane, each zone of the plurality of zones comprising a central point of said zone.

5. Method (100) according to claim 4, wherein the step of calculating the speed of displacement (102) of the virtual image point is implemented at the central point of each zone of the plurality of zones, and wherein the step of calculating and determining (103) the integration time comprises a step of calculating an integration time for the central point of each zone of the plurality of zones, depending on the speed of displacement calculated for said central point of said zone, and a step of selecting a determined integration time, amongst the calculated integration times, the selection being made, according to a selection criterion, the integration time calculated for the central point of each zone of the plurality of zones being an increasing function of the speed of displacement calculated for the central point of each zone of the plurality of zones at the step of calculating the speed of displacement (102).

6. Method (100) according to claim 5, wherein the step of calculating a reference image (105) comprises calculating a plurality of reference images, each reference image depending on the estimated displacement, during the integration time, of the virtual image point at the central point of each zone of the plurality of zones;

7. Method (100) according to claim 6, wherein the step of calculating a corrected image (106) comprises, for each zone of the plurality of zones in the image plane, calculating a corrected image (106) obtained by aggregating a plurality of elementary corrected images, each elementary corrected image being calculated on the basis of the raw image and a reference image of the plurality of reference images.

8. Device (10) for optical detection of an object (2), the device comprising an image sensor (1), the image sensor (1) and the object (2) moving relative to each other, the image sensor (1) being configured to receive a measurement of a speed of displacement of the image sensor (1), the speed of displacement of the image sensor (1) being measured in a fixed coordinate system relative to the object (2), the detection device (10) further comprising a processing module configured to receive and process the images acquired by the sensor, the processing module comprising:
- a definition module configured to define at least one zone in an image plane of the image sensor, the at least one zone comprising a central point;
- a first calculation module configured to calculate a speed of displacement of a virtual image point in the image plane, the virtual image point being a virtual image, of a virtual object point, formed on the image plane at the central point of the at least one zone, the speed of displacement of the image point being calculated from the measurement of the speed of displacement of the image sensor;
- a second module configured to calculate an integration time calculated according to an increasing function of the calculated speed of displacement of the virtual image point at the central point of the at least one zone, and to determine an integration time determined on the basis of the calculated integration time at the central point of the at least one zone, and to control the acquisition by the image sensor (1) of a raw image, on the basis of the determined integration time;
- a third module configured to calculate a reference image that depends on the estimated displacement of the virtual image point at the central point of the at least one zone on the image plane during the integration time, the estimated displacement being estimated on the basis of the integration time and the calculated speed of displacement of the virtual image point, the reference image being calculated on the basis of a local impulse response at the image point and on the basis of the estimated displacement of the image point;
- a fourth module configured to calculate a corrected image that depends on the raw image and the reference image;
- a fifth module configured to select pixels in the corrected image, the selected pixels having a value greater than a predetermined threshold.

9. Computer program comprising a set of instructions that can be executed on the processor of a computer, configured so that when said set of instructions is executed on said processor, the method according to one of claims 1 to 7 is implemented.

10. Computer-readable medium, said medium comprising a set of instructions that can be executed on the processor of a computer, configured so that when said set of instructions is executed on said processor, the method according to one of claims 1 to 7 is implemented.
